# EUROPÄISCHE PATENTSCHRIFT

(11) **EP 1 217 143 B1**
(45) Veröffentlichungstag und Bekanntmachung des Hinweises auf die Patenterteilung: **04.04.2007**
(21) Anmeldenummer: 01129627.4
(22) Anmeldetag: 12.12.2001
(51) Int. Cl.: E04F 11/108, E04F 11/16

(54) **Trittstufe für Treppen**
Step assembly for staircases
Marche pour escaliers

(30) Priorität: 22.12.2000 DE 20021825 U
(43) Veröffentlichungstag der Anmeldung: 26.06.2002
(73) Patentinhaber: NEUCON Maschinen- und Bausysteme G.m.b.H. u. Co. Kommanditgesellschaft, D-74076 Heilbronn (DE)
(72) Erfinder:
(74) Vertreter: Clemens, Gerhard

(56) Entgegenhaltungen:
- EP-A- 1 145 869
- WO-A-90/13424
- DE-A- 2 505 208
- DE-A- 3 241 685
- GB-A- 2 299 501

## Beschreibung

Die vorliegende Erfindung betrifft eine Trittstufe für Treppen mit einem tragenden Stufenkern und einer zumindest die Oberseite, Vorderseite, Unterseite, Rückseite des Stufenkerns umgebenden Beschichtung.

Im Rahmen einer wirtschaftlichen Fertigung einer Treppenstufe werden für den tragenden Stufenkern Materialien eingesetzt, die aus optischen Gründen von einer Beschichtung umgeben werden müssen. Derartige Trittstufen sollen eine hohe Verschleißfestigkeit aufweisen, optisch ansprechend aussehen und eine dauerhaft zuverlässige Funktion innerhalb der Treppe gewährleisten.

### STAND DER TECHNIK

Aus der deutschen Patentschrift DE-A-32 41 685 ist eine Treppenstufe bekannt, bei der ein plattenförmiger Kern aus Holzwerkstoff ausgebildet ist, der auf seiner der Trittfläche zugewandten Seite eine hochverdichtete Schicht aufweist. Der Kern ist allseitig mit Furnieren umgeben. Die besondere Ausgestaltung, die sich in der langjährigen Praxis als besonders zuverlässig bewährt hat, bezieht sich auf die obere Vorderkante der Treppenstufe. In diesem Bereich wird eine Holzleiste eingesetzt, die eine erhöhte Festigkeit aufweist und im Zusammenspiel mit den anschließenden Furnieren eine runde Kantenausbildung gewährleistet.

In der WO 90/13424 A ist eine Schichtpressstoffplatte bekannt, der aus einem Kern besteht, der von mehreren mit Phenolharz getränkten Kernpapierbahnen gebildet wird und von einer Deckschicht umgeben ist, die von einer mit Melaminharz getränkten Dekorpapierbahn gebildet wird. Derartige Platten werden beispielsweise für Spanplatten, Möbelwände, Tischplatten und Arbeitsplatten eingesetzt. Eine dunkle Linie an der Schnittkante wird dadurch vermieden, dass die Kernpapierbahn des Kerns aus gebleichtem, mit anorganischen Weißpigmenten eingefärbtem Kernpapier besteht. Derartige aus dem Möbelbau bekannten Platten sind nicht zu einer dauerhaften funktionsfähigen Begehung, wie bei Treppenstufen erforderlich, geeignet.

In der DE 25 05 208 A ist ein Verfahren zum Fertigen von insbesondere Treppen dargestellt, bei der auf die Oberfläche zunächst einen verschleißfesten Zuschlag enthaltende Schicht auf Kunstharzbasis aufgebracht wird, auf die nach deren Härtung eine verstärkte Kunststoffschicht befestigt wird. Die untere Oberflächenschicht wird durch Sandspritzen aufgerauht und auf sie eine dünne Harzechicht aufgebracht, die mit einem rutschhemmenden Zusatz bedeckt wird. Ein derartiges Verfahren ist nicht geeignet eine Treppenstufe wirtschaftlich herzustellen, die einen optisch ansprechenden Furniercharakter aufweist und gleichzeitig eine dauerhaft zuverlässige Begehung ermöglicht.

In der GB-A-2 229 501 ist Paneelelement offenbart, das eine spezielle Eckausbildung aufweist, bei der mehrere aufeinander angeordnete Rechteckprofile die Seitenfläche bilden, wobei das Paneel oberseitig mit einer Beschichtung versehen ist.

### DARSTELLUNG DER ERFINDUNG

Ausgehend von dem genannten Stand der Technik liegt der vorliegenden Erfindung die Aufgabe zugrunde, eine Trittstufe für Treppen der eingangs genannten Art anzugeben, die im Rahmen einer industriellen Fertigung wirtschaftlich herstellbar ist, eine einfache Montage gewährleistet, hinsichtlich der Optik höchsten Ansprüchen genügt und eine dauerhaft zuverlässige Funktion innerhalb des Einsatzes einer Treppe gewährleistet. Dabei sollen insbesondere unter Beachtung einer industriell wirtschaftlichen Herstellung besonders hohe Qualitätsvorschriften hinsichtlich des Verschleißes der Oberfläche durch die Begehung in einfacher Art und Weise umgesetzt werden können. Auch soll der Einsatz einer zusätzlich im vorderen Oberkantenbereich der Trittstufe bisher erforderlichen Holzleiste vermieden werden. Darüber hinaus soll angestrebt werden, dass eine Trittstufe für Treppen zur Verfügung gestellt wird, die hinsichtlich ihrer Verschleißfestigkeit und ihrer wirtschaftlichen Herstellung im Rahmen einer industriellen Fertigung optimale Grundlagen bietet.

Die erfindungsgemäße Trittstufe ist durch die Merkmale des unabhängigen Anspruchs 1 gegeben. Vorteilhafte Ausgestaltungen und Weiterbildungen sind Gegenstand der von dem unabhängigen Anspruch 1 abhängigen Ansprüche.

Des Weiteren betrifft die Erfindung eine Treppe, die mit den erfindungsgemäßen Trittstufen ausgestaltet ist. Diese erfindungsgemäße Treppe ist durch die Merkmale des unabhängigen Anspruchs 21 gegeben. Vorteilhafte Ausgestaltungen und Weiterbildungen sind in den von dem unabhängigen Anspruch 21 abhängigen Ansprüchen dargestellt.

Die erfindungsgemäße Trittstufe für Treppen zeichnet sich demgemäß dadurch aus, dass die Beschichtung wie folgt aufgebaut und angeordnet ist: auf der Oberseite und um die vordere Oberkante herumgezogen auf der Vorderseite ist zumindest eine eine Dekorschicht enthaltende, mit Harz getränkte, erste Laminatschicht angeordnet und auf der ersten Laminatschicht ist ebenfalls um die vordere Oberkante herumgezogen zumindest eine Lage einer durchsichtigen Verschleißfolie angeordnet.

Eine besonders vorteilhafte Ausgestaltung, die eine wirtschaftliche Herstellungsweise gewährleistet und gleichzeitig eine dauerhaft zuverlässige Funktion umsetzt, zeichnet sich dadurch aus, dass die erste Laminatschicht auf die Oberseite und die Vorderseite aufgeleimt ist, nachdem die Verschleißfolie unter Druck und Wärme auf die ersten Laminatschicht aufgebracht ist.

Hinsichtlich einer wirtschaftlichen Herstellungsweise hat sich als besonders vorteilhaft herausgestellt, eine Verschleißfläche einzusetzen, die Korund enthält, wodurch besonders hohe Verschleißfestigkeit erzielt wird.

Im Rahmen einer industriellen Fertigung ist es besonders vorteilhaft, auch auf der Unterseite zumindest eine eine Dekorschicht enthaltende, harzgetränkte zweite Laminatschicht aufzubringen, die bevorzugt aufgeleimt wird.

In diesem Zusammenhang ergänzt sich eine weitere wirtschaftliche Ausführungsform dadurch, dass auf der Rückseite und/oder auf der linken und rechten Stirnseite eine eine oberseitige Dekorschicht aufweisende Kunststoffschicht angeordnet ist, die eingefärbt sein kann.

Als Harz wird bevorzugt Melaninharz eingesetzt, da dies eine zuverlässige Verbindung beziehungsweise Durchtränkung der Schichten gewährleistet und andererseits eine wirtschaftliche Umsetzung ermöglicht.

Eine weitere, vorteilhafte Ausgestaltung der erfindungsgemäßen Trittstufe zeichnet sich dadurch aus, dass die Kunststoffschicht auf die Rückseite aufgeleimt ist, wobei bevorzugt die Dekorschicht aufgedruckt ausgebildet ist.

Es hat sich als besonders vorteilhaft herausgestellt, die Kunststoffschicht aus Acrylnitril-Butadien-Styrol-Copolymeren (ABS) auszubilden, da diese Maßnahme eine wirtschaftliche Herstellung im industriellen Rahmen gewährleistet und gleichzeitig eine zuverlässige und optisch ansprechende Verbindung mit dem Stufenkern umgesetzt werden kann.

Es können jedoch auch Kunststoffe aus PVC, PS, POM, PP eingesetzt werden.

Bevorzugt wird zumindest die vordere Oberkante der Trittstufe gerundet ausgebildet, wobei in einer weiteren Ausführungsvariante sämtliche Kanten der Trittstufe gerundet ausgebildet sind.

Im Rahmen einer wirtschaftlichen Herstellung, die eine industrielle Herstellung der in der Rede stehenden Trittstufen zum Ziel hat, hat es sich als besonders vorteilhaft herausgestellt, die Trittstufen beziehungsweise deren Beschichtung dahingehend auszubilden, dass die erste Laminatschicht eine Dicke im Bereich von 0,3 bis 1,0 mm, insbesondere ca. 0,6 mm, aufweist, wobei weitergehend eine bevorzugte Ausgestaltung sich dadurch auszeichnet, dass die zweite Laminatschicht eine Dicke im Bereich von 0,1 bis 0,5 mm (Millimeter), insbesondere ca. 0,3 mm, aufweist. Eine besonders vorteilhafte Ausführungsform, die eine besonders hohe Tragfähigkeit gewährleistet und gleichzeitig eine industrielle, wirtschaftliche Fertigung ermöglicht, zeichnet sich dadurch aus, dass der tragende Stufenkern als hochverdichtete Spanplatte, als Leimholzplatte oder als Aluminiumpaneel ausgebildet ist.

Aufgrund der genannten Merkmale ist es in vorteilhafter Art und Weise möglich, Trittstufen herzustellen, die optisch unterschiedliche Dekorflächen beziehungsweise Dekorschichten aufweisen, um im Bedarfsfall für den Benutzer die gewünschten optischen Effekte umsetzen zu können.

Eine besonders vorteilhafte Ausgestaltung zeichnet sich dadurch aus, dass auf der Oberseite mehrere Laminatschichten vorhanden sind und die obere Laminatschicht die Dekorschicht enthält, wobei die Dekorschicht bevorzugt bedrucktes Papier enthält.

Eine erfindungsgemäße Treppe mit Trittstufen und Geländer zeichnet sich dadurch aus, dass im Rahmen dieser Treppe Trittstufen eingesetzt werden, die im Vorangehenden beschrieben worden sind.

Bevorzugt ist diese Treppe als Tragbolzentreppe ausgebildet.

Durch den Einsatz der ersten beziehungsweise zweiten Laminatschicht in Verbindung mit der Verschleißschicht wird aufgrund der hohen Zugfestigkeit der genannten Schichten die Stabilität der Trittstufe und damit der gesamten Treppe gegenüber der bekannten Ausführungsform weiter erhöht. Es kommt zu weniger Vibration während der Begehung der Treppe, was vom Begeher als angenehm empfunden wird. Somit werden durch die erfindungsgemäßen Merkmale die Eigenschaften einer Treppe, die mit den erfindungsgemäßen Trittstufen ausgestattet ist, hinsichtlich Stabilität und dauerhaft zuverlässiger Nutzung weiter erhöht.

Weitere Ausführungsformen und Vorteile der Erfindung ergeben sich durch die in den Ansprüchen ferner aufgeführten Merkmale sowie durch das nachstehend angegebene Ausführungsbeispiel. Die Merkmale der Ansprüche können in beliebiger Weise miteinander kombiniert werden, insoweit sie sich nicht offensichtlich gegenseitig ausschließen.

### KURZE BESCHREIBUNG DER ZEICHNUNG

Die Erfindung sowie eine vorteilhafte Ausführungsform derselben wird im Folgenden anhand des in der Zeichnung dargestellten Beispiels näher beschrieben und erläutert. Die der Beschreibung und der Zeichnung zu entnehmenden Merkmale können einzeln für sich oder zu mehreren in beliebiger Kombination erfindungsgemäß angewandt werden. Es zeigen:
- Fig. 1: schematische Perspektivdarstellung einer Trittstufe für eine Treppe und
- Fig. 2: schematische Schnittdarstellung in teilweise aufgelöstem Zustand der Beschichtungen der Trittstufe gemäß Fig. 1 und Schnittführung I - I in überhöhtem Maßstab.

### WEGE ZUM AUSFÜHREN DER ERFINDUNG

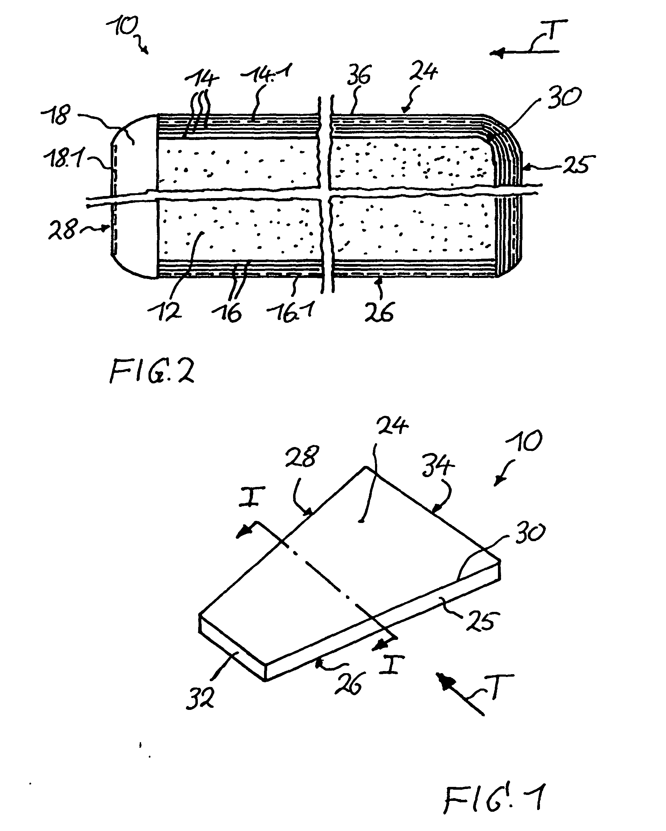

Eine in Fig. 1 perspektivisch dargestellte plattenförmige Trittstufe 10 wird in Trittrichtung T begangen. Die Trittstufe 10 besitzt eine in Trittrichtung T als Ansicht zu sehende, vertikale Vorderseite 25, eine die Trittfläche bildende horizontale Oberseite 24, eine vertikale Rückseite 28, eine horizontale Unterseite 26, eine vertikale linke Stirnseite 32 und eine vertikale rechte Stirnseite 34.

Der Aufbau der Trittstufe 10 ist in Fig. 2 schematisch im Schnitt dargestellt. Die Trittstufe 10 besitzt im Querschnitt gesehen einen Stufenkern 12, der im vorliegenden Ausführungsbeispiel durch zwei hochverdichtete, miteinander verleimte Spanplatten gebildet wird. Auf der Oberseite 24 sind drei erste Laminatschichten 14 mit einer weiteren oberen Dekorschicht 14.1 aufgeleimt, die um die vordere, gerundete Oberkante 30 des Stufenkerns 12 herumgezogen sind und auch auf der Vorderseite 25 aufgeleimt sind. Die Dekorschicht 14.1 ist eine dünne bedruckte mit Melaninharz getränkte Papierfolie und die Laminatschichten 14 bestehen auch aus mit Melaninharz getränkten Papierfolien. Im vorliegenden Ausführungsbeispiel weisen die Laminatschichten 14 und die Verschleißfolie 36 eine Dicke von 0,6 mm (Millimeter) auf.

Oberseitig ist mit der Dekorschicht 14.1 eine Verschleißfolie 36 verbunden, die ebenfalls um die vordere Oberkante 30 herumgezogen ist. Die ersten Laminatschichten 14, die Dekorschicht 14.1 und die Verschleißfolie 36 werden unter Einsatz von Druck und Wärme zu einem Schichtenkörper verbunden, der dann auf die Oberseite 24 und um die Kante 30 herumgezogen die Vorderseite 25 aufgeleimt wird. Die Verschleißfolie 36 weist Korundmaterial auf, so dass eine besonders hohe Verschleißfestigkeit erzielt werden kann. Es ist auch möglich, mehrere Verschleißfolien vorzusehen, wodurch die Verschleißfestigkeit weiter gesteigert werden kann.

Auf die Unterseite 26 der Trittstufe 10 sind zwei zweite Laminatschichten 16 aufgeleimt, die unterseitig ebenfalls eine Dekorschicht 16.1 aufweisen. Auch hier ist die Dekorschicht 16.1 eine dünne bedruckte mit Melaninharz getränkte Papierfolie und die zweiten Laminatschichten 16 bestehen ebenfalls aus mit Melaninharz getränkten Papierfolien.

Auf der Rückseite 28 des Stufenkerns 12 ist eine in der Regel eingefärbte Kunststoffschicht 18 aufgeleimt, die auf ihrer Oberseite eine bedruckte Dekorschicht 18.1 besitzt. Als Material für die Kunststoffschicht 18 wird bevorzugt Acrylnitril-Butadien-Styrol-Copolymer (ABS) eingesetzt.

Auf der linken und rechten Stirnseite 32, 34 können ebenfalls Kunststoffschichten mit bedruckter Dekorschicht aufgeleimt sein.

Sämtliche übrigen Kanten der Trittstufe 10 sind gerundet ausgebildet.

## Patentansprüche

1. Trittstufe (10) für Treppen mit einem tragenden Stufenkern (12) und einer die Oberseite (24), Vorderseite (25), Unterseite (26) und Rückseite (28) des Stufenkerns (12) umgebenden Beschichtung,
**dadurch gekennzeichnet, dass**
- die Beschichtung wie folgt aufgebaut und angeordnet ist:
- auf der Oberseite (24) und um die vordere Oberkante (30) herumgezogen auf der Vorderseite (25) ist zumindest eine eine Dekorschicht (14.1) enthaltende, mit Harz getränkte erste Laminatschicht (14) angeordnet und
- auf der ersten Laminatschicht (14) ist ebenfalls um die vordere Oberkante (30) herumgezogen zumindest eine Lage einer transparenten Verschleißfolie (36) angeordnet.

2. Trittstufe nach Anspruch 1,
**dadurch gekennzeichnet, dass**
- die erste Laminatschicht (14) auf die Oberseite (24) und die Vorderseite (25) aufgeleimt ist nachdem die Verschleißfolie (36) unter Druck und Wärme auf die ersten Laminatschicht (14) aufgebracht ist.

3. Trittstufe nach Anspruch 1 oder 2,
**dadurch gekennzeichnet, dass**
- die Verschleißfolie (36) Korund (Aluminiumdioxid) enthält.

4. Trittstufe nach einem oder mehreren der vorstehenden Ansprüche,
**dadurch gekennzeichnet, dass**
- auf der Unterseite (26) zumindest eine eine Dekorschicht (16.1) enthaltende, mit Harz getränkte, durchsichtige zweite Laminatschicht (16) angeordnet ist.

5. Trittstufe nach Anspruch 4,
**dadurch gekennzeichnet, dass**
- die zweite Laminatschicht (16) auf die Unterseite (26) aufgeleimt ist.

6. Trittstufe nach einem oder mehreren der vorstehenden Ansprüche,
**dadurch gekennzeichnet, dass**
- das Harz der zumindest ersten Laminatschicht (14) und/oder zweiten Laminatschicht (16) ein Melaninharz ist.

7. Trittstufe nach einem oder mehreren der vorstehenden Ansprüche,
**dadurch gekennzeichnet, dass**
- auf der Rückseite (28) und/oder auf der linken und rechten Stirnseite (32, 34) des Stufenkerns (12) eine eine Dekorschicht (18.1) aufweisende Kunststoffschicht (18) angeordnet ist.

8. Trittstufe nach Anspruch 7,
**dadurch gekennzeichnet, dass**
- die Kunststoffschicht (18) auf die Rückseite (28) aufgeleimt ist.

9. Trittstufe nach Anspruch 7 oder 8,
**dadurch gekennzeichnet, dass**
- die Dekorschicht (18.1) aufgedruckt auf der Kunststoffschicht (18) vorhanden ist.

10. Trittstufe nach Anspruch 7, 8 oder 9,
**dadurch gekennzeichnet, dass**
- die Kunststoffschicht (18) aus Acrylnitril-Butadien-Styrol-Copolymeren (ABS) besteht.

11. Trittstufe nach einem oder mehreren der vorstehenden Ansprüche,
**dadurch gekennzeichnet, dass**
- zumindest die vordere Oberkante (30) des Stufenkerns (12) gerundet ausgebildet ist.

12. Trittstufe nach einem oder mehreren der vorstehenden Ansprüche,
**dadurch gekennzeichnet, dass**
- sämtliche Kanten der Trittstufe (10) gerundet ausgebildet sind.

13. Trittstufe nach Anspruch 1 oder 2,
**dadurch gekennzeichnet, dass**
- die erste Laminatschicht (14) eine Dicke im Bereich von 0,3 bis 1,0 mm (Millimeter), insbesondere ca. 0,6 mm, aufweist.

14. Trittstufe nach Anspruch 4 oder 5,
**dadurch gekennzeichnet, dass**
- die zweite Laminatschicht (16) eine Dicke im Bereich von 0,1 bis 0,5 mm (Millimeter), insbesondere ca. 0,3 mm, aufweist.

15. Trittstufe nach einem oder mehreren der Ansprüche 7 bis 10,
**dadurch gekennzeichnet, dass**
- die Dicke der Kunststoffschicht (18) im Bereich von 1,0 bis 2,0 mm (Millimeter) liegt, insbesondere ca. 1,2 mm beträgt.

16. Trittstufe nach einem oder mehreren der vorstehenden Ansprüche,
**dadurch gekennzeichnet, dass**
- der tragende Stufenkern (12) als hochverdichtete Spanplatte, als Leimholzplatte oder als Aluminiumpaneel ausgebildet ist.

17. Trittstufe nach einem oder mehreren der vorstehenden Ansprüche,
**dadurch gekennzeichnet, dass**
- die Dekorschicht (14.1, 16.1) beziehungsweise die Dekorschicht (18.1) optisch gleich oder unterschiedlich gestaltet sind.

18. Trittstufe nach einem oder mehreren der vorstehenden Ansprüche,
**dadurch gekennzeichnet, dass**
- die gesamte Oberfläche der Trittstufe mit einer Verschleißschicht umgeben ist.

19. Trittstufe nach einem oder mehreren der vorstehenden Ansprüche,
**dadurch gekennzeichnet, dass**
- auf der Oberseite (24) mehrere Laminatschichten (14) vorhanden sind und die obere Laminatschicht die Dekorschicht (14.1) enthält.

20. Trittstufe nach einem oder mehreren der vorstehenden Ansprüche,
**dadurch gekennzeichnet, dass**
- die Dekorschicht (14.1) bedrucktes Papier enthält.

21. Treppe mit Trittstufen und einem Geländer,
**dadurch gekennzeichnet, dass**
- die Treppe Trittstufen (10) nach einem oder mehreren der vorstehenden Ansprüche aufweist.

22. Treppe nach Anspruch 21,
**dadurch gekennzeichnet, dass**
- die Treppe als Tragbolzentreppe ausgebildet ist.

## Claims

1. Step (10) for staircases having a load-bearing step core (12) and a coating surrounding the top side (24), front side (25), underside (26) and rear side (28) of the step core (12), **characterized in that**
- the coating is structured and arranged as follows:
- on the top side (24) and, drawn around the front top edge (30), on the front side (25), there is disposed at least one first laminate layer (14) containing a decorative layer (14.1) and impregnated with resin, and
- on the first laminate layer (14) there is disposed, likewise drawn around the front top edge (30), at least one layer of a transparent wearing film (36).

2. Step according to Claim 1, **characterized in that**
- the first laminate layer (14) is glued onto the top side (24) and the front side (25) once the wearing film (36) is applied under pressure and heat to the first laminate layer (14).

3. Step according to Claim 1 or 2, **characterized in that**
- the wearing film (36) contains corundum (aluminium dioxide).

4. Step according to one or more of the preceding claims, **characterized in that**
- on the underside (26) there is disposed at least one transparent, second laminate layer (16), which contains a decorative layer (16.1) and is impregnated with resin.

5. Step according to Claim 4, **characterized in that**
- the second laminate layer (16) is glued onto the underside (26).

6. Step according to one or more of the preceding claims, **characterized in that**
- the resin of the at least first laminate layer (14) and/or second laminate layer (16) is a melanine resin.

7. Step according to one or more of the preceding claims, **characterized in that**
- on the rear side (28) and/or on the left and right end face (32, 34) of the step core (12) there is disposed a plastics layer (18) having a decorative layer (18.1).

8. Step according to Claim 7, **characterized in that**
- the plastics layer (18) is glued onto the rear side (28).

9. Step according to Claim 7 or 8, **characterized in that**
- the decorative layer (18.1), printed on, is present on the plastics layer (18).

10. Step according to Claim 7, 8 or 9, **characterized in that**
- the plastics layer (18) consists of acrylonitrile-butadiene-styrene copolymers (ABS).

11. Step according to one or more of the preceding claims, **characterized in that**
- at least the front top edge (30) of the step core (12) is of rounded configuration.

12. Step according to one or more of the preceding claims, **characterized in that**
- all the edges of the step (10) are of rounded configuration.

13. Step according to Claim 1 or 2, **characterized in that**
- the first laminate layer (14) has a thickness within the range from 0.3 to 1.0 mm (millimetres), in particular about 0.6 mm.

14. Step according to Claim 4 or 5, **characterized in that**
- the second laminate layer (16) has a thickness within the range from 0.1 to 0.5 mm (millimetres), in particular about 0.3 mm.

15. Step according to one or more of Claims 7 to 10, **characterized in that**
- the thickness of the plastics layer (18) lies within the range from 1.0 to 2.0 mm (millimetres), in particular about 1.2 mm.

16. Step according to one or more of the preceding claims, **characterized in that**
- the load-bearing step core (12) is configured as a highly compressed chipboard, as a glued timber board, or as an aluminium panel.

17. Step according to one or more of the preceding claims, **characterized in that**
- the decorative layer (14.1, 16.1) and the decorative layer (18.1) are designed to be visually identical or visually different.

18. Step according to one or more of the preceding claims, **characterized in that**
- the entire surface of the step is surrounded with a wearing layer.

19. Step according to one or more of the preceding claims, **characterized in that**
- a plurality of laminate layers (14) are present on the top side (24) and the upper laminate layer contains the decorative layer (14.1).

20. Step according to one or more of the preceding claims, **characterized in that**
- the decorative layer (14.1) contains printed paper.

21. Staircase having steps and a handrail, **characterized in that**
- the staircase has steps (10) according to one or more of the preceding claims.

22. Staircase according to Claim 21, **characterized in that**
- the staircase is configured as a supporting bolt staircase.

## Revendications

1. Marche (10) pour des escaliers, avec un corps de marche porteur (12) et un revêtement entourant la face supérieure (24), la face avant (25), la face inférieure (26) et la face arrière (28) du corps de marche (12),
**caractérisée en ce que** le revêtement est constitué et disposé comme suit :
- au moins une première couche laminée (14) imprégnée de résine et contenant une couche décorative (14.1) est disposée sur la face supérieure (24), et sur la face avant (25) en recouvrant l'arête supérieure avant (30), et
- au moins une couche d'un film anti-usure transparent (36) est disposée sur la première couche laminée (14), également en recouvrant l'arête supérieure avant (30).

2. Marche selon la revendication 1, **caractérisée en ce que** la première couche laminée (14) est collée sur la face supérieure (24) et la face avant (25) après que le film anti-usure (36) ait été apposé sur la première couche laminée (14) sous application de pression et de chaleur.

3. Marche selon la revendication 1 ou 2, **caractérisée en ce que** le film anti-usure (36) contient du corindon (dioxyde d'aluminium).

4. Marche selon une ou plusieurs des revendications précédentes, **caractérisée en ce qu'**au moins une deuxième couche laminée translucide (16) imprégnée de résine et contenant une couche décorative (16.1) est disposée sur la face inférieure (26).

5. Marche selon la revendication 4, **caractérisée en ce que** la deuxième couche laminée (16) est collée sur la face inférieure (26).

6. Marche selon une ou plusieurs des revendications précédentes, **caractérisée en ce que** la résine de la première et/ou de la deuxième couche laminée au moins unique (14, 16) est une résine de mélamine.

7. Marche selon une ou plusieurs des revendications précédentes, **caractérisée en ce qu'**une couche de matière plastique (18) présentant une couche décorative (18.1) est disposée sur la face arrière (28) et/ou sur les faces frontales gauche et droite (32, 34) du corps de marche (12).

8. Marche selon la revendication 7, **caractérisée en ce que** la couche de matière plastique (18) est collée sur la face arrière (28).

9. Marche selon la revendication 7 ou 8, **caractérisée en ce que** la couche décorative (18.1) est imprimée sur la couche de matière plastique (18).

10. Marche selon la revendication 7, 8 ou 9, **caractérisée en ce que** la couche de matière plastique (18) est constituée d'acrylonitrile-butadiène-styrène (ABS).

11. Marche selon une ou plusieurs des revendications précédentes, **caractérisée en ce qu'**au moins l'arête supérieure avant (30) du corps de marche (12) est réalisée arrondie.

12. Marche selon une ou plusieurs des revendications précédentes, **caractérisée en ce que** toutes les arêtes de la marche (10) sont réalisées arrondies.

13. Marche selon la revendication 1 ou 2, **caractérisée en ce que** la première couche laminée (14) présente une épaisseur comprise entre 0,3 et 1,0 mm (millimètre), notamment d'environ 0,6 mm.

14. Marche selon la revendication 4 ou 5, **caractérisée en ce que** la deuxième couche laminée (16) présente une épaisseur comprise entre 0,1 et 0,5 mm (millimètre), notamment d'environ 0,3 mm.

15. Marche selon une ou plusieurs des revendications 7 à 10, **caractérisée en ce que** l'épaisseur de la couche de matière plastique (18) est comprise entre 1,0 et 2,0 mm (millimètres), notamment est égale à environ 1,2 mm.

16. Marche selon une ou plusieurs des revendications précédentes, **caractérisée en ce que** le corps de marche porteur (12) est réalisé sous forme de panneau de particules à haute densité, de plaque de lamellé collé ou de panneau d'aluminium.

17. Marche selon une ou plusieurs des revendications précédentes, **caractérisée en ce que** la couche décorative (14.1, 16.1) et la couche décorative (18.1) sont réalisées visuellement identiques ou différentes.

18. Marche selon une ou plusieurs des revendications précédentes, **caractérisée en ce que** toute la surface de la marche est entourée d'une couche anti-usure.

19. Marche selon une ou plusieurs des revendications précédentes, **caractérisée en ce que** plusieurs couches laminées (14) sont présentes sur la face supérieure (24), et la couche laminée supérieure contient la couche décorative (14.1).

20. Marche selon une ou plusieurs des revendications précédentes, **caractérisée en ce que** la couche décorative (14.1) contient du papier imprimé.

21. Escalier avec des marches et une balustrade, **caractérisé en ce que** l'escalier comporte des marches (10) selon une ou plusieurs des revendications précédentes.

22. Escalier selon la revendication 21, **caractérisé en ce que** l'escalier est réalisé sous la forme d'un escalier à boulons portants.
